# EUROPEAN PATENT SPECIFICATION

(11) **EP 0 522 024 B1**
(45) Date of publication and mention of the grant of the patent: **07.06.1995**
(21) Application number: 91907209.0
(22) Date of filing: 14.03.1991
(51) Int. Cl.: C08J 5/18, B29C 33/68, B32B 27/04

(54) **POLYMERIC RELEASE FILMS AND THEIR METHOD OF USE**
POLYMERE TRENNFILME UND VERFAHREN ZU IHRER VERWENDUNG
FILMS DE SEPARATION POLYMERES ET PROCEDE D'UTILISATION ASSOCIE

(30) Priority: 30.03.1990 US 502216
(43) Date of publication of application: 13.01.1993
(73) Proprietor: AlliedSignal Inc., Morristown, New Jersey 07962-2245 (US)
(72) Inventor: MOHAJER, Yousef, Midlothian, VA 23113 (US); NGUYEN, Truc-Lam Huynh, Midlothian, VA 23112 (US); SASTRI, Vinod, Ram, Richmond, VA 23225 (US); DEGRASSI, Alfieri, Pottsville, PA 17901 (US); BELFOURE, Edward, Louis, Orwigsburg, PA 17961 (US)
(74) Representative: Brock, Peter William
(86) International application number: US9101721
(87) International publication number: WO9115538

(56) References cited:
- US-A- 3 686 355
- US-A- 4 444 829
- US-A- 4 505 982
- US-A- 4 675 361
- Derwent Accession No 89-188 438 (Wpil) & JP-A-01 126 389

## Description

### BACKGROUND OF THE INVENTION

### 1. Field of the Invention

The present invention is directed to production of polymer film with surface properties that have been modified through use of polymeric additives. Particularly, the invention is directed to the methods of preparation of polymer film with desirable surface properties and the use of such films in various applications such as release film and as carrier films in the production of molding compounds.

### 2. Background of the Invention

Polysiloxanes are known to have a particularly low critical surface tension value and have been suggested for incorporation with various polymers to modify the surface characteristics of those materials. U.S. 4,675,361 to Ward discloses a method of modifying the surface of polymers with polymeric additives by dispersing a minor amount of thermoplastic segmented block copolymer through a base polymer, the segmented block copolymer comprising a first hard segment and a second soft segment of polysiloxane. The modified base polymers are contemplated for use in tissue or blood-contacting medical devices and for fibers for use in woven textiles.

Thermoplastic molding compositions comprising at least 35% by weight of a copolyamide containing polydiorganosiloxane carbonamide units mixed with graft products of vinyl polymers in rubbers are disclosed in U.S. 4,822,852 to Wittmann et al.

Certain experimental work has been published relating to the blending of block copolymers of polydimethylsiloxane with other homopolymers. These materials are known to produce films with high siloxane surface concentrations. See, for example, D.G. Legrand and R.L. Gaines, Jr., Polym. Prepr. 11 442 (1970); D.W. Dwight et al., Polym. Prepr. 20, (1), 702 (1979); and J.J. O'Malley, Polym. Prepr. 18 (1977). Minor amounts of block copolymers containing segments of polydimethylsiloxane and any one of polycarbonate, polystyrene, poly-(2,6-diphenyl-1,4-phenylene oxide), and polyamideimide, have been blended with base polymers for modifying their surfaces, as disclosed in U.S. Patent 3,961,122 and 3,686,355. U.S. 3,686,355 discloses a well-defined system cast from solution, in contrast to the melt extruded film herein. Derwent Accession No. 89-188438 discloses solution cast surface modifying agents.

Polyorganosiloxanes have been utilized as coatings upon solid substrates such as paper to provide suitable release properties and much work has been directed to the improvement of such coatings. The solid substrates are provided with a cured siloxane release coating by applying certain polyorganosiloxane fluids to the surface of the substrate and exposing the applied fluid to radiation to rapidly cure and bond the fluid, such as in U.S. patent 4,133,939 to Bakerman et al. Such release coatings, while effective and meeting the needs of certain applications, require major capital investment together with proprietary processes.

The use of polymer films with desired release properties are known in certain applications. U.S. 4,444,829 to Bollen et al. discloses modification of a polyamide film with a polyolefin component, thereby obtaining good tear strength from the polyamide component while the polyolefin component provides good peelability of the film that is acceptable for certain applications.

However, for many applications it is desirable to provide a polymer film with good strength and dimensional stability which provides release properties equivalent or better than those obtained from cured polyorganosiloxane coatings. An efficient and economic process for production of such films with desired tailored release properties is needed. It is desired to provide a method for increasing the relative contact angle and reducing the critical surface energy by the use of surface modifying copolymer additives in blends with base polymers.

The present invention provides a melt extruded polymeric release film comprising:
(A) a film forming base polymer and
(B) a surface modifying copolymer additive in an amount sufficient to provide desired release properties to the surface of the release-film; said copolymer additive comprising:
   (1) a hard segment polymer component selected from the group consisting of polyamide, polyester, polyurethane, polyurea, vinyl copolymers, and novolaks, said hard segment polymer component being selected to obtain a desired level of compatibility with the film forming base polymer; and
   (2) a soft segment polymer component selected from the group consisting of polyalkylene oxide, polyfluorocarbon, and polydiorganosiloxane of the formula: 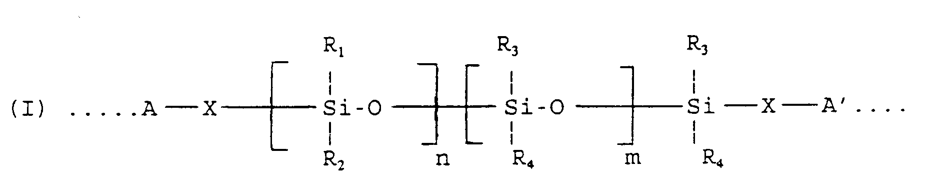 in which R₁, R₂, R₃ and R₄ independently represent C₁-C₁₈ linear of branched alkyl, cycloalkyl, alkenyl, aryl, aralkyl, halogenated alkyl, halogenated aryl, or halogenated aralkyl;
      X represents C₁-C₁₈ alkylene, arylene or aralkylene radicals, preferably C₂-C₆ alkylene radicals;
      n and m may be the same or different, the sum of n+m being greater than 4 and less than 1000; and
      A and A' are independently hard segments or blocks of film forming base polymer.

The method of use of the release film as a substrate for deposition of reinforcing fiber and resin matrix in the production of composite materials including prepregs, bulk molding compound, sheet molding compound and thick molding compound is a part of this invention.

The surface migrating potential and the release properties of polysiloxanes are taken advantage of, according to one embodiment of the invention, by blending siloxane containing copolymers with polyamides, polyesters, and various other polymers. Films produced from these blended polymers possess very good release properties. Release properties are further enhanced when film is drawn and oriented. The additive in the blend should not adversely affect the other physical and performance properties of the resultant film.

The films of this invention have been found to have excellent release properties which may be tailored for many specific end use requirements. Films from these blends will have better dimensional stability, better thermal stability, improved film strength/integrity, and improved moisture resistance over the silicone coated kraft paper now widely used for release applications. By selection of the siloxane copolymer and the amount to be incorporated in the blend, it is possible to obtain a range of desired release properties.

As used herein, the term "base polymer" will refer to the film forming polymer whose surface characteristics are so modified. Such base polymers often have excellent physical properties such as being characterized by high flexibility, good softness, and good structural strength.

Typical film forming base polymers which may be utilized according to the present invention include polyurethanes, polysulfones, polyesters, polyamides, polyimides, polyolefins such as polyethylenes and polypropylenes and copolymers thereof, poly(acrylonitrile-butadienestyrene), styrene-butadiene block copolymers, styrene-isoprene-styrene block copolymers, polymethylmethacrylate, polyvinylacetate, polyvinylchloride, and polyureas.

Also included are polyester-polyethers, polyether-polyamides, copolyesters, polyethylene-vinyl acetate, polyethylene ethylacrylate, polyethylene-vinyl alcohol, ionomers, polyurethaneureas, polyetherurethaneureas, polyesterurethanes, polyvinylidene chloride, polyphenylene oxide, polyacrylic acid, polyethylene-polypropylene copolymers, and polycarbonates.

Preferred base polymers include polyamides, polyesters, polyvinylchloride, polyvinylidene chloride, and ethylene-vinyl acetate. Polyamides include, for example, polyepsiloncaprolactam, polyhexamethylene adipamide, and mixtures and copolymers thereof. Polyesters include polyethylene terephthalate and polybutylene terephthalate.

According to the invention, the segmented, block or graft copolymer (B), is dispersed throughout the base polymer (A), for example by coreacting or blending. The copolymer additive includes at least two different polymer components in, segment form. The two components are a soft, nonpolar segment and a polar hard segment. The nonpolar soft block is of low surface free energy, while the hard segment is characterized by an ability to reduce the tendency of the soft block to completely exude out of the surface of the base polymer. In addition the hard segment imparts physical properties to the additive such that the structural strength or bulk properties of the blend are not significantly altered. Depending on the end use, complete thermodynamic compatibility of the additive and the base polymer may not be necessary. A high degree of compatibility in fact, can reduce the tendency of the additive to migrate to the surface to be active. Such additives will be less efficient as a surface modifier than those containing hard segments of lower compatibility with the base polymer which serves to enhance migration.

The term "segmented" refers to a relatively short length of a repeating unit e.g. less than 10 monomeric units, but preferably less than 3 monomeric units, typically alternating more than once, with structural formulas such as ABAB. The hard segments are relatively short in length typically including 1 to 10 repeating units. The hard segments should be short in length relative to the nonpolar soft blocks in order to achieve desired surface characteristics. Hard segments include those film forming polymers listed above, preferred hard segments being polyamide, polyester, polyurethane, polyurea, vinyl copolymers and novolaks. Preferred soft blocks include polydimethylsiloxanes, polydialkylsiloxanes, polyfluoroalkyl alkyl siloxanes, polydiarylsiloxanes and polyaryl alkyl siloxanes. To a lesser extent, soft blocks may also include polyalkylene oxides, polyfluorocarbons, polyfluoroaryl alkyl siloxanes, polyarylalkyl alkyl siloxanes, and polyfluoroarylalkyl alkyl siloxanes. In the soft segments listed above, "alkyl" and "aryl" are defined with reference to structural formula I provided above.

The preparation of segmented block copolymers (or multipolymers) may be performed by several procedures which differ in degree to which the structure of the resulting product may be defined, as described in U.S.-A-4,675,361.

One procedure involves the coupling of at least two preformed blocks or segments which are prepared in separate reactions prior to the coupling reaction. This procedure involves a well defined structure if the coupling reaction precludes like blocks or segments from reacting with themselves but only allows dissimilar blocks or segments to couple with one another.

Other coupling reactions may occur resulting in a less defined structure if the two preformed blocks or segments possess the ability (via the coupling reaction) to react with themselves as well as the dissimilar block or segment.

Additional coupling reactions may occur when at least one preformed block or segment is coupled with a second block or segment created during the coupling reaction. In this case, the original length (molecular weight) of the preformed block or segment is known (by virtue of a separate reaction used to prepare it) but the sequence distribution of the copolymer is not known exactly since both coupling and chain growth is possible in the reaction which produces the second block or segment. Suitable methods for forming these and other such copolymers are set out in Noshay and McGrath, Block Copolymers Overview and Critical Survey (Academic Press 1977).

The preferred block copolymers used according to the present invention are of the formula A-B-A as defined hereinbelow. The copolymers can be of several different configurations depending on the number of polymer blocks attached to the soft segment such as organosiloxane block. In their simplest form, the copolymers can have the configuration AB in which A represents the hard segment block (i.e. polyamide, polyester, polyurethane, polyurea, vinyl copolymers, novolaks,) and B the soft segment block (e.g. polydimethylsiloxanes, polydialkylsiloxanes and polyfluoroalkyl alkyl siloxanes). The block copolymers can also be of the type A-B-A or B-A-B, depending upon the method of coupling or formation of the blocks.

The block copolymer additives used in the present invention can vary in composition and structure. They may be graft, branched, or linear block copolymers, but being block copolymers, they contain repeating segments or blocks of the same monomeric unit and these blocks have a length close to the average block length for that particular monomer. However, the average block length of one polymerized comonomer component can differ from the average block length of a second polymerized comonomer component and the relative average block lengths largely determine the properties of the block copolymer additives.

An example of a linear block copolymer of A and B monomeric units may have the following structure:
...AAAAABBBAAAABBBBAAAAAABB...
Where the A block has an average of 5 units and the B block averages three units. An example of a graft block copolymer of A and B monomeric units may have the following structure: 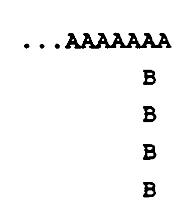
The block copolymer additives used in the present invention can be prepared by a number of conventional techniques. They should be prepared, however, so that they will impart the desired surface properties to the base polymer as well as have the desired compatibility therewith. The molecular weight of the block copolymer may vary widely but it should be sufficiently high so that it is non-volatile in the desired composition and its use. For most applications, the polymerized comonomer component of the block copolymer additive which serves to distribute the additive in the base polymer should have an average block length of at least three monomer units, and the surface-active polymerized comonomer component of the additive which provides the desired surface property or properties should have an average block length of at least five monomer units. The maximum average block length of each comonomer component can only be determined empirically, i.e. it depends largely on the amount of the block copolymer additive used with a particular polymer since the effect of a particular polymerized comonomer component of the block copolymer additive can be reduced by using a smaller amount of the additive.

The amount of the copolymer additive used may be determined empirically and would depend largely on its composition as well as the particular application of the polymeric film and on the thickness of the film. The copolymer additive should not, however, be used in an amount which would undesirably alter the bulk properties of the base polymer to a significant extent. For most applications, the amount of the copolymer additive should be such that the composition of the siloxane segments is at least 0.1 weight percent of the blend. It is possible that the siloxane segment may comprise a substantial portion of the blend, for example up to 75 weight percent. However, a preferred range is 0.1 to 20 weight percent, most preferred 0.1 to 10 weight percent.

The block copolymer additive can be admixed with the base polymer by a number of conventional techniques. For example, it may be mixed in solution or in melt form or it may be dry blended. The mixing should produce a substantially uniform distribution of the additive in the polymer. Preferably, the mixing should be carried out so that the whole system becomes fluid enough to permit migration of the surface modifying material and development of surface concentration of the additive.

The polymer composition can be cast from solution or extruded to form films.

Specifically, in forming the copolymer additive of the present invention, one comonomer is selected to provide the desired surface property, as for example, organosiloxanes for water repellency or friction reduction, and as the compatibility-imparting constituent, a second comonomer is selected which has the desired compatibility with the base polymer, as for example, polystyrene when the base polymer is polystyrene or polyphenylene oxide or polyamide or polyurea when the base polymer is nylon.

Typical soft segments include polydiorganosiloxanes of the following generic formula: 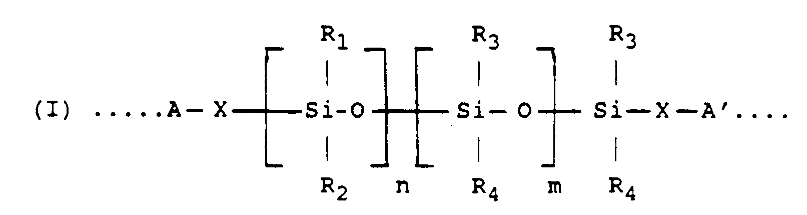
in which R₁, R₂, R₃, R₄ independently represent C₁-C₁₈ linear or branched alkyl, cycloalkyl, alkenyl, aryl, aralkyl, halogenated alkyl, halogenated aryl, or halogenated aralkyl;
X represents C₁-C₁₈ alkylene, arylene or aralkylene radicals, preferably C₂-C₆ alkylene radicals;
n and m may be the same or different, the sum of n+m being greater than 4 and less than 1000, preferably greater than 10 and less than 600, and more preferably greater than 20 and less than 300; and
A and A' are independently hard segments or blocks of film forming base polymer listed above, e.g. polyamide, polyester, polyurethane, polyurea, and copolymers thereof.

The ratio of the total hard segments and total soft blocks in the polymer additive may vary to a considerable extent so long as there is a sufficient amount of the total soft segment to give a high water contact angle and reduce the critical surface free energy of the film surface, and sufficient amount of the hard segment to prevent exudation of the polymer additive from the blend. Suitable amounts of the soft segment may include from 1-95 weight % of the copolymer and suitable amounts of the hard segment may include from 99-5 weight % of the copolymer. Preferred range of the soft segment is 10-95 weight % of the copolymer.

In a typical process for preparing films copolymers containing siloxane chain segments are blended with appropriate film forming base polymers (e.g. polyamides, polyesters etc.), extruded and drawn into films. The resulting films have excellent release properties.

For example, siloxane-polyamide segmented copolymers can be synthesized by an interfacial polymerization method, using a siloxane diamine, an acid chloride, aliphatic or aromatic, and a chain extender for example an aliphatic or aromatic diamine of C₂ to C₂₅.

Siloxane-polyureas are synthesized by solution or melt polymerization of a siloxane diamine, a diisocyanate, aliphatic or aromatic, and a chain extender.

Target release properties for the films can be attained by any or a combination of the following methods:
1) Varying the soft segment chain length
2) Varying the weight percent of the soft segment in the polymer.
3) Varying the weight percent (loading level) of the copolymer additive in the blend.

The films of this invention offer a range of release properties suitable for use in various release film applications. The films are particularly applicable for the production of prepreg material forms and in the production of sheet molding compound (SMC) and thick molding compound (TMC) as well as bulk molding compound (BMC). The films are also particularly applicable as a carrier web for the production of fiber reinforced panels (FRP).

In the process for production of SMC comprising casting a layer of heat-curable thermo-setting resin, in fluid form, onto a continuously advancing polymeric film; introducing reinforcing material onto the advancing fluid layer; contacting a polymeric film to the top surface of the reinforced fluid layer thereby forming a sandwiched composite; advancing the sandwiched composite through a series of kneading and compacting rolls, and winding the sandwiched composite into a roll for partial curing; the invention of this application includes the improvement which comprises using as the polymeric film the release film of this invention described above. A similar process employing a different polymeric film is disclosed in U.S. 4,568,505 to Bollen, et al.

In the process for production of TMC comprising impregnating discontinuous reinforcing fiber, i.e. desired lengths of chopped fiber, with resin paste, applying the impregnated fiber/resin composition to a moving carrier release film, then applying a second release film to sandwich the composition, then moving the sandwiched composition through a compaction area, thereby compacting the composition to form a sheet, generally much thicker than SMC, then cutting the TMC sheet into desired lengths for packaging, the invention of the application includes the improvement which comprises using the release film of this invention described above as the carrier release film and/or the second release film. A process describing the production of TMC utilizing release film is disclosed in U.S. 3,932,980.

Prepreg materials are fiber/resin matrix forms consisting of continuous unidirectional or woven fibers coated or impregnated with a controlled quantity of an uncured catalyzed resin formulation. Prepreg tapes of continuous fiber reinforcement in uncured matrix resin are one of the most widely used forms of composite materials for structural applications. The process for production of prepreg materials comprises orientation of a controlled amount of fiber on a release substrate and casting a resin onto the release substrate in a measured amount to obtain the desired fiber-resin ratio, then calendaring the fiber/resin matrix to obtain a uniform thickness and to close fiber gaps before being wound on a core. The release substrate is usually left between layers of the resulting prepreg tape.

In the production of prepreg materials such as tapes, the release film of this invention will offer required release from fiber/resin matrix while providing sufficiently high tensile strength and sufficiently low elongation to minimize web distortion or failure during processing. By selection of the hard segment as discussed above, transfer of "contaminants" from release web to resin is avoided. Improved tear resistance and tensile strength, improved dimensional stability relative to moisture absorption and improved gauge tolerance for better coating consistency relative to silicone coated paper are all attributes of the film of this invention. In the examples which follow, we refer to polydimethyl siloxane diamines as siloxane diamine.

### Example 1 (Siloxane-polyamide: siloxane diamine MW= 10000 g/mol; 65 wt.% of siloxane monomer in polymer)

In a reactor fitted with a stirrer is added 22 grams sodium hydroxide, 7.5 grams tetramethylammonium hydroxide, and 27.5 grams 1,6-hexanediamine. Water (1000 ml), is then added and stirred to dissolve all chemicals. In a 750 ml beaker is added 25.6 grams terephthaloyl chloride and 25.6 grams isophthaloyl dichloride, followed by 500 ml of dichloromethane, and stirred to dissolve. In a second 750 ml beaker is weighed 146.2 grams of a siloxane diamine (MW = 10000 gm/mol) and 500 ml dichloromethane, to dissolve the diamine. The two organic solutions are added simultaneously to the aqueous solution in the reactor with constant stirring. Polymer soon starts to precipitate out of the solution. The reaction is stirred for 1 hour, after which it is dumped into excess methanol. This is stirred for 15 minutes and the liquid decanted/filtered. The polymer is washed twice with excess water, filtered, washed with methanol, and dried overnight in a vacuum oven at 80°C, to yield 138 grams of a siloxane-polyamide (Polymer I).

### Example 2 (Siloxane-polyamide: siloxane diamine MW= 8000 g/mol; 65 wt. % of siloxane monomer in polymer)

Procedure as in Example 1, using:
i) 17.5 grams sodium hydroxide, 5.6 grams tetramethyl-ammonium hydroxide and 21.21 grams of 1,6-hexanediamine in 700 ml water.
ii) 20.02 grams terephthaloyl chloride and 20.02 grams isophthaloyl dichloride in 350 ml dichloromethane, and
iii) 113.75 grams of siloxane diamine (MW = 8000 gm/mol) in 600 ml dichloromethane
Yield of polymer (Polymer II) - 150 grams.

### Example 3 (Siloxane-polyamide; siloxane diamine MW = 15000 g/mol; 75 wt. % of siloxane monomer in polymer)

Procedure as in Example 1, using:
i) 8.95 grams sodium hydroxide, 11.7 grams tetramethyl-ammonium hydroxide and 4.0 grams of 1,6-hexanediamine in 800 ml water.
ii) 11.0 grams terephthaloyl chloride and 11.0 grams isophthaloyl dichloride in 400 ml dichloromethane, and
iii) 100.5 grams of siloxane diamine (MW = 15000 gm/mol) in 400 ml dichloromethane
Yield of polymer (Polymer III) - 121 grams.

### Example 4 (Siloxane-polyamide; siloxane diamine MW = 10000 g/mol; 90 wt. % of siloxane monomer in polymer)

Procedure as in Example 1, using:
i) 5 grams sodium hydroxide, 7.5 grams tetramethyl-ammonium hydroxide and 4.3 grams of 1,6-hexanediamine in 800 ml water.
ii) 5.3 grams terephthaloyl chloride and 5.3 grams isophthaloyl dichloride in 400 ml dichloromethane, and
iii) 134.1 grams of siloxane diamine (MW = 10000 gm/mol) in 400 ml dichloromethane
Yield of polymer (Polymer III) - 138 grams.

### Example 5 (Siloxane-polyurea: siloxane diamine MW = 10000 g/mol; 90 wt. % of siloxane diamine in polymer)

In a reactor fitted with a high torque stirrer was added 13.1 grams 1,1' - methylenebis [4-isocyanato] cyclohexane, available as Desmodur W^{R} (Mobay) and 400 ml tetrahydrofuran, and the mixture was stirred to dissolve the diisocyanate. In a 1000 ml beaker was weighed 152.8 grams siloxane diamine (MW = 9000 gm/mol) and 3.8 grams 1,6-hexanediamine. Tetrahydrofuran (400 ml) and N,N-dimethylacetamide (200 ml) was added and stirred to dissolve. The diamine solution was added to the diisocyanate solution with constant stirring. The viscosity of the solution gradually increased. Stirring was continued for 2 hours. The viscous solution was poured into excess water, and stirred for 15 minutes. The liquid was decanted and the polymer washed once more with excess water. The solution was filtered, and the polymer washed with water and dried in a vacuum oven at 80°C overnight, to give 148.5 grams of siloxane-polyurea (Polymer IV).

### Example 6 (Blends)

Blends were made by dry blending in a rotating blender for 40 minutes using 5 wt. %, 2.5 wt. %, 1.75 wt. %, and 1 wt. % of the siloxane-polymers from Examples 1 - 5, with Capron^{R} 8209 (film grade nylon 6 resin-available from Allied-Signal Inc.). These blends were re-extruded from a twin screw extruder, pelletized and dried.

### Example 7 (Films)

Films from the various blends were extruded and tested for release properties. As shown in Table 1, the mechanical properties of the films made from the blends were substantially equivalent or better than a control film extruded from Capron 8209 (nylon 6). The percent elongation and tear strength of blends were better than control. As shown in Table 2, the release properties of the films from blends are greatly improved over the control and offer a range of desirable release properties.

**TABLE 1**

| | Polymer | | |
|---|---|---|---|
| | IV | V | Control |
| I.D.* | Amid-10K(90) | Urea-10K(90) | Control |
| Wt.% Copolymer Additive in Blend | 1.0 | 1.5 | 0 |
| Tensile¹ Modulus (psi) | 100,500 (693 MPa) | 111,500 (768.9 MPa) | 109,442 (754.7 MPa) |
| Tensile¹ Yield (psi) | 5,675 (39.1 MPa) | 5,651 (38.9 MPa) | 5,476 (37.8 MPa) |
| Tensile¹ Elong. (%) | 18.2 | 17.6 | 17.4 |
| Tensile¹ Strength (psi) | 15,550 (107.2 MPa) | 17,600 (121.4 MPa) | 16,833 (116.1 MPa) |
| Elongation¹ (%) | 511.2 | 459.8 | 425.0 |

| Graves² Tear | | | |
|---|---|---|---|
| (g/mil) | 551.0 | 523.3 | 460.7 |
| (g/meter) | (217 x 10⁵) | (206 x 10⁵) | (181.4 x 10⁵) |

| | | | |
|---|---|---|---|
| *Polymer Type - Molecular weight of siloxane diamine in thousands g/mole (weight percent of siloxane diamine in copolymer) | | | |
| ¹ - Method ASTM D 882 | | | |
| ² - Method ASTM D 1004 | | | |

**TABLE 2**

| Polymer | I.D.* | Weight % Copolymer Additive in Blend | Peel** Strength (g) | Water Contact Angle (°) |
|---|---|---|---|---|
| I | Amide-10K (65) | 2.5 | 45.1 | 98 |
| I | Amide-10K (65) | 1.0 | 983 | 83 |
| II | Amide-8K (65) | 1.5 | 963.1 | 78 |
| III | Amide-15K (75) | 5 | 16.4 | 97 |
| III | Amide-15K (75) | 2.5 | 21.2 | 94 |
| III | Amide-15K (75) | 1.5 | 61.1 | 84 |
| IV | Amide-10K (90) | 1.0 | 1283.0 | 88 |
| V | Urea-10K (90) | 1.5 | 692.9 | 86 |
| Control | Control | 0 | Does not peel *** | 70 |

| | | | | |
|---|---|---|---|---|
| * Polymer Type - Molecular weight of siloxane diamine in thousands g/mole (weight percent of siloxane diamine in copolymer) | | | | |
| ** By ASTM D903 | | | | |
| *** In most instances, film elongates and does not peel. In few instances that peeling occurred peel strength was greater than 2000 grams. | | | | |

## Claims (Claims for the following Contracting State(s): BE, DE, DK, FR, GB, IT, LU)

1. A melt extruded polymeric release film comprising:
(A) a film forming base polymer and
(B) a surface modifying copolymer additive in an amount sufficient to provide desired release properties to the surface of the release film; said copolymer additive comprising:
(1) a hard segment polymer component selected from the group consisting of polyamide, polyester, polyurethane, polyurea, vinyl copolymers, and novolaks, said hard segment polymer component being selected to obtain a desired level of compatibility with the film forming base polymer; and
(2) a soft segment polymer component selected from the group consisting of polyalkylene oxide, polyfluorocarbon, and polydiorganosiloxane of the formula: 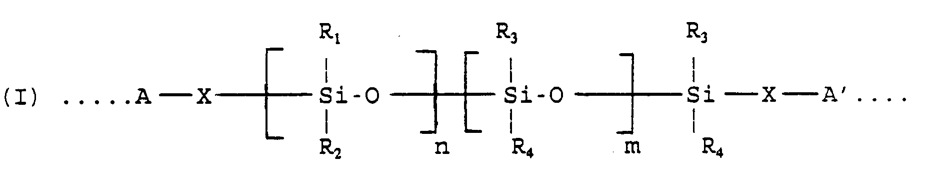 in which R₁, R₂, R₃, R₄ independently represent C₁-C₁₈ linear or branched alkyl, cycloalkyl, alkenyl, aryl, aralkyl, halogenated alkyl, halogenated aryl, or halogenated aralkyl;
X represents C₁-C₁₈ alkylene, arylene or aralkylene radicals, preferably C₂-C₆ alkylene radicals;
n and m may be the same or different, the sum of n+m being greater than 4 and less than 1000; and
A and A' are independently hard segments or blocks of film forming base polymer.

2. The polymeric release film of claim 1 wherein said hard segment polymer component is selected from the group consisting of polyamide, polyester, polyurethane, and polyurea and copolymers thereof; said soft segment polymer component is said polydiorganosiloxane; and the film forming base polymer is selected from the group consisting of polyamide, polyester, polyvinyl chloride, polyvinylidene chloride, and ethylene-vinyl acetate copolymers.

3. The polymeric release film of claim 2 wherein said polydiorganosiloxane is selected from the group consisting of polydialkylsiloxane, polyfluoroalkyl alkyl siloxane, polydiarylsiloxane, and polyaryl alkyl siloxane.

4. The polymeric release film of claim 3 wherein the copolymer additive is present in the film in an amount so that the siloxane containing soft segment polymer component is at least 0.1 weight percent of the film.

5. The polymeric release film of claim 4 wherein the film forming base polymer is polyamide, the hard segment polymer component is polyamide, and the soft segment polymer component is polydimethylsiloxane.

6. The polymeric release film of claim 4 wherein the film forming base polymer is polyamide, the hard segment polymer component is polyurea, and the soft segment polymer component is polydimethylsiloxane.

7. In a method for the production of sheet molding compound comprising casting a layer of heat-curable resin onto a continuously advancing release film, introducing reinforcing material onto the advancing resin layer, contacting a second release film to the top surface of the reinforced resin layer thereby forming a sandwiched composite, kneading and compacting the sandwiched composite, and winding the sandwiched composite; the improvement comprising using as at least one of the said release films, the polymeric release film of claim 1.

8. In a method for the production of sheet molding compound comprising casting a layer of heat-curable resin onto a continuously advancing release film, introducing reinforcing material onto the advancing resin layer, contacting a second release film to the top surface of the reinforced resin layer thereby forming a sandwiched composite, kneading and compacting the sandwiched composite, and winding the sandwiched composite; the improvement comprising using as at least one of the said release films the polymeric release film of claim 4.

9. In a method for the production of sheet molding compound comprising casting a layer of heat-curable resin onto a continuously advancing release film, introducing reinforcing material onto the advancing∼ resin layer, contacting a second release film to the top surface of the reinforced resin layer thereby forming a sandwiched composite, kneading and compacting the sandwiched composite, and winding the sandwiched composite; the improvement comprising using as at least one of the said release films to the polymeric release film of claim 5.

10. In a method for the production of sheet molding compound comprising casting a layer of heat-curable resin onto a continuously advancing release film, introducing reinforcing material onto the advancing resin layer, contacting a second release film to the top surface of the reinforced resin layer thereby forming a sandwiched composite, kneading and compacting the sandwiched composite, and winding the sandwiched composite; the improvement comprising using as at least one of the said release films the polymeric release film of claim 6.

11. In a method for the production of thick molding compound comprising impregnating discontinuous reinforcing fiber with resin paste, applying a layer of the impregnated fiber to a moving carrier release film, applying a second release film to the top surface of the impregnated fiber layer to form a sandwiched composite, compacting the composite, and cutting the compacted composite to a desired length; the improvement comprising using as at least one of said release films the polymeric release film of claim 1.

12. In a method for the production of thick molding compound comprising impregnating discontinuous reinforcing fiber with resin paste, applying a layer of the impregnated fiber to a moving carrier release film, applying a second release film to the top surface of the impregnated fiber layer to form a sandwiched composite, compacting the composite, and cutting the compacted composite to a desired length; the improvement comprising using as at least one of said release films the polymeric release film of claim 4.

13. In a method for the production of thick molding compound comprising impregnating discontinuous reinforcing fiber with resin paste, applying a layer of the impregnated fiber to a moving carrier release film, applying a second release film to the top surface of the impregnated fiber layer to form a sandwiched composite, compacting the composite, and cutting the compacted composite to a desired length; the improvement comprising using as at least one of said release films the polymeric release film of claim 5.

14. In a method for the production of thick molding compound comprising impregnating discontinuous reinforcing fiber with resin paste, applying a layer of the impregnated fiber to a moving carrier release film, applying a second release film to the top surface of the impregnated fiber layer to form a sandwiched composite, compacting the composite, and cutting the compacted composite to a desired length; the improvement comprising using as at least one of said release films the polymeric release film of claim 6.

## Claims (Claims for the following Contracting State(s): ES)

1. A melt extruded polymeric release film comprising:
(A) a film forming base polymer and
(B) a surface modifying copolymer additive in an amount sufficient to provide desired release properties to the surface of the release film; said copolymer additive comprising:
(1) a hard segment polymer component selected from the group consisting of polyamide, polyester, polyurethane, polyurea, vinyl copolymers, and novolaks, said hard segment polymer component being selected to obtain a desired level of compatibility with the film forming base polymer; and
(2) a soft segment polymer component selected from the group consisting of polyalkylene oxide, polyfluorocarbon, and polydiorganosiloxane of the formula: 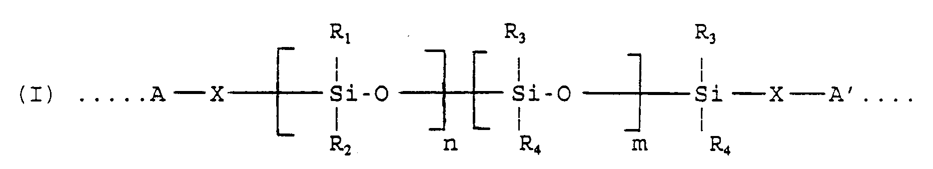 in which R₁, R₂, R₃, R₄ independently represent C₁-C₁₈ linear or branched alkyl, cycloalkyl, alkenyl, aryl, aralkyl, halogenated alkyl, halogenated aryl, or halogenated aralkyl;
X represents C₁-C₁₈ alkylene, arylene or aralkylene radicals, preferably C₂-C₆ alkylene radicals;
n and m may be the same or different, the sum of n+m being greater than 4 and less than 1000; and
A and A' are independently hard segments or blocks of film forming base polymer.

2. The polymeric release film of claim 1 wherein said hard segment polymer component is selected from the group consisting of polyamide, polyester, polyurethane, and polyurea and copolymers thereof; said soft segment polymer component is said polydiorganosiloxane; and the film forming base polymer is selected from the group consisting of polyamide, polyester, polyvinyl chloride, polyvinylidene chloride, and ethylene-vinyl acetate copolymer

3. The polymeric release film of claim 2 wherein said polydiorganosiloxane is selected from the group consisting of polydialkylsiloxane, polyfluoroalkyl alkyl siloxane, polydiarylsiloxane, and polyaryl alkyl siloxane.

4. The polymeric release film of claim 3 wherein the copolymer additive is present in the film in an amount so that the siloxane containing soft segment polymer component is at least 0.1 weight percent of the film.

5. The polymeric release film of claim 4 wherein the film forming base polymer is polyamide, the hard segment polymer component is polyamide, and the soft segment polymer component is polydimethylsiloxane.

6. The polymeric release film of claim 4 wherein, the film forming base polymer is polyamide, the hard segment polymer component is polyurea, and the soft segment polymer component is polydimethylsiloxane.

7. In a method for the production of sheet molding compound comprising casting a layer of heat-curable resin onto a continuously advancing release film, introducing reinforcing material onto the advancing resin layer, contacting a second release film to the top surface of the reinforced resin layer thereby forming a sandwiched composite, kneading and compacting the sandwiched composite, and winding the sandwiched composite; the improvement comprising using as at least one of the said release films, the polymeric release film of claim 1.

8. In a method for the production of sheet molding compound comprising casting a layer of heat-curable resin onto a continuously advancing release film, introducing reinforcing material onto the advancing resin layer, contacting a second release film to the top surface of the reinforced resin layer thereby forming a sandwiched composite, kneading and compacting the sandwiched composite, and winding the sandwiched composite; the improvement comprising using as at least one of the said release films the polymeric release film of claim 4.

9. In a method for the production of sheet molding compound comprising casting a layer of heat-curable resin onto a continuously advancing release film, introducing reinforcing material onto the advancing∼ resin layer, contacting a second release film to the top surface of the reinforced resin layer thereby forming a sandwiched composite, kneading and compacting the sandwiched composite, and winding the sandwiched composite; the improvement comprising using as at least one of the said release films to the polymeric release film of claim 5.

10. In a method for the production of sheet molding compound comprising casting a layer of heat-curable resin onto a continuously advancing release film, introducing reinforcing material onto the advancing resin layer, contacting a second release film to the top surface of the reinforced resin layer thereby forming a sandwiched composite, kneading and compacting the sandwiched composite, and winding the sandwiched composite; the improvement comprising using as at least one of the said release films the polymeric release film of claim 6.

11. In a method for the production of thick molding compound comprising impregnating discontinuous reinforcing fiber with resin paste, applying a layer of the impregnated fiber to a moving carrier release film, applying a second release film to the top surface of the impregnated fiber layer to form a sandwiched composite, compacting the composite, and cutting the compacted composite to a desired length; the improvement comprising using as at least one of said release films the polymeric release film of claim 1.

12. In a method for the production of thick molding compound comprising impregnating discontinuous reinforcing fiber with resin paste, applying a layer of the impregnated fiber to a moving carrier release film, applying a second release film to the top surface of the impregnated fiber layer to form a sandwiched composite, compacting the composite, and cutting the compacted composite to a desired length; the improvement comprising using as at least one of said release films the polymeric release film of claim 4.

13. In a method for the production of thick molding compound comprising impregnating discontinuous reinforcing fiber with resin paste, applying a layer of the impregnated fiber to a moving carrier release film, applying a second release film to the top surface of the impregnated fiber layer to form a sandwiched composite, compacting the composite, and cutting the compacted composite to a desired length; the improvement comprising using as at least one of said release films the polymeric release film of claim 5.

14. In a method for the production of thick molding compound comprising impregnating discontinuous reinforcing fiber with resin paste, applying a layer of the impregnated fiber to a moving carrier release film, applying a second release film to the top surface of the impregnated fiber layer to form a sandwiched composite, compacting the composite, and cutting the compacted composite to a desired length; the improvement comprising using as at least one of said release films the polymeric release film of claim 6.

15. A process for preparing a polymeric release film which comprises melt extrusion of a composition comprising:
(A) a film forming base polymer and
(B) a surface modifying copolymer additive in an amount sufficient to provide desired release properties to the surface of the release-film; said copolymer additive comprising:
(1) a hard segment polymer component selected from the group consisting of polyamide, polyester, polyurethane, polyurea, vinyl copolymers, and novolaks, said hard segment polymer component being selected to obtain a desired level of compatibility with the film forming base polymer; and
(2) a soft segment polymer component selected from the group consisting of polyalkylene oxide, polyfluorocarbon, and polydiorganosiloxane of the formula: 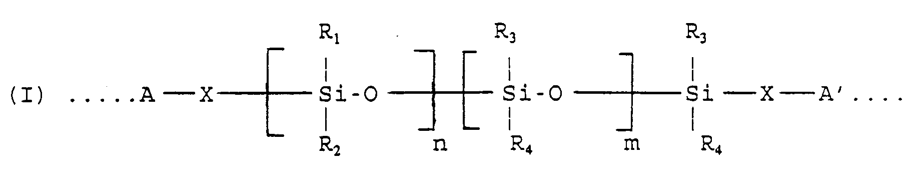 in which R₁, R₂, R₃, R₄ independently represent C₁-C₁₈ linear or branched alkyl, cycloalkyl, alkenyl, aryl, aralkyl, halogenated alkyl, halogenated aryl, or halogenated aralkyl;
X represents C₁-C₁₈ alkylene, arylene or aralkylene radicals, preferably C₂-C₆ alkylene radicals;
n and m may be the same or different, the sum of n+m being greater than 4 and less than 1000; and
A and A' are independently hard segments or blocks of film forming base polymer.

16. A process according to claim 15 wherein said hard segment polymer component is selected from the group consisting of polyamide, polyester, polyurethane, and polyurea and copolymers thereof; said soft segment polymer component is said polydiorganosiloxane; and the film forming base polymer is selected from the group consisting of polyamide, polyester, polyvinyl chloride, polyvinylidene chloride, and ethylene-vinyl acetate.

17. A process according to claim 16 wherein said polydiorganosiloxane is selected from the group consisting of polydialkylsiloxane, polyfluoroalkyl alkyl siloxane, polydiarylsiloxane, and polyaryl alkyl siloxane.

18. A process according to claim 17 wherein the copolymer additive is present in the film in an amount so that the siloxane containing soft segment polymer component is at least 0.1 weight percent of the film.

19. A process according to claim 18 wherein the film forming base polymer is polyamide, the hard segment polymer component is polyamide, and the soft segment polymer component is polydimethylsiloxane.

20. A process according to claim 18 wherein the film forming base polymer is polyamide, the hard segment polymer component is polyurea, and the soft segment polymer component is polydimethylsiloxane.

## Patentansprüche (Patentansprüche für folgende(n) Vertragsstaat(en): BE, DE, DK, FR, GB, IT, LU)

1. Schmelzextrudierter polymerer Trennfilm mit:
(A) einem filmbildenden Grundpolymer und
(B) einem die Oberflache modifizierenden Copolymerzusatz in einer zur Schaffung gewünschter Trenneigenschaften an der Oberfläche des Trennfilmes ausreichenden Menge, welcher Copolymerzusatz folgendes aufweist:
(1) eine Hartsegment-Polymerkomponente, die aus der aus Polyamid, Polyester, Polyurethan, Polyharnstoff, Vinyl-Copolymeren und Novolaken bestehenden Gruppe ausgewählt ist, wobei die Hartsegment-Polymerkomponente so ausgewählt ist, daß ein gewünschtes Maß an Verträglichkeit mit dem filmbildenden Grundpolymer erhalten wird; und
(2) eine Weichsegment-Polymerkomponente, die aus der aus Polyalkylenoxyd, Polyfluorkohlenstoff und Polydiorgano-Siloxan der Formel: 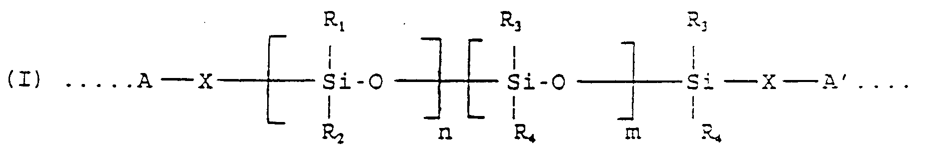 bestehenden Gruppe ausgewählt ist, worin R₁, R₂, R₃ und R₄ unabhängig ein lineares oder verzweigtes Alkyl mit C₁-C₁₈, ein Cycloalkyl, Alkenyl, Aryl, Aralkyl, ein halogeniertes Alkyl, ein halogeniertes Aryl oder ein halogeniertes Aralkyl darstellen;
X eine Alkylenradikale mit C₁-C₁₈, eine Arylen- oder Aralkylenradikale, vorzugsweise eine Alkylenradikale mit C₁-C₁₈, darstellt;
n und m gleich oder verschieden sind, wobei die Summe von n+m größer als 4 und kleiner als 1000 ist; und
A und A' unabhängig Hartsegmente oder Blöcke des filmbildenden Grundpolymers sind.

2. Polymerer Trennfilm nach Anspruch 1, bei dem die Hartsegment-Polymerkomponente aus der aus Polyamid, Polyester, Polyurethan und Polyharnstoff sowie Copolymeren davon bestehenden Gruppe ausgewählt ist; die Weichsegment-Polymerkomponente das Polydiorgano-Siloxan ist; und das filmbildende Grundpolymer aus der aus Polyamid, Polyester, Polyvinylchlorid, Polyvinylidenchlorid und Äthylen-Vinylazetat-Copolymeren bestehenden Gruppe ausgewählt ist.

3. Polymerer Trennfilm nach Anspruch 2, bei dem das Polydiorgano-Siloxan aus der aus Polydialkyl-Siloxan, Polyfluoralkyl-Alkyl-Siloxan, Polydiaryl-Siloxan und Polyaryl-Alkyl-Siloxan bestehenden Gruppe ausgewählt ist.

4. Polymerer Trennfilm nach Anspruch 3, bei dem der Copolymerzusatz in dem Film in einer derartigen Menge vorhanden ist, daß die Siloxan enthaltende Weichsegment-Polymerkomponente zumindest 0,1 Gewichtsprozent des Filmes ausmacht.

5. Polymerer Trennfilm nach Anspruch 4, bei dem das filmbildende Grundpolymer Polyamid ist, die Hartsegment-Polymerkomponente Polyamid ist und die Weichsegment-Komponente Polydimethyl-Siloxan ist.

6. Polymerer Trennfilm nach Anspruch 4, bei dem das filmbildende Grundpolymer Polyamid ist, die Hartsegment-Polymerkomponente Polyharnstoff ist und die Weichsegment-Komponente Polydimethyl-Siloxan ist.

7. Verfahren zur Herstellung einer Foliengießverbindung, welches das Gießen einer Schicht eines wärmehärtenden Harzes auf einen sich kontinuierlich fortbewegenden Trennfilm, das Einbringen von Verstärkungsmaterial auf die sich fortbewegende Harzschicht und das Kontaktieren eines zweiten Trennfilmes mit der oberen Fläche der verstärkten Harzschicht umfaßt, wodurch ein sandwichartiges Kompositmaterial gebildet wird, das Kneten und Kompaktieren des sandwichartigen Kompositmateriales sowie das Aufwinden des sandwichartigen Kompositmateriales; wobei die Verbesserung die Verwendung des polymeren Trennfilmes nach Anspruch 1 als wenigstens einen der Trennfilme aufweist.

8. Verfahren zur Herstellung einer Foliengießverbindung, welches das Gießen einer Schicht eines wärmehärtenden Harzes auf einen sich kontinuierlich fortbewegenden Trennfilm, das Einbringen von Verstärkungsmaterial auf die sich fortbewegende Harzschicht und das Kontaktieren eines zweiten Trennfilmes mit der oberen Fläche der verstärkten Harzschicht umfaßt, wodurch ein sandwichartiges Kompositmaterial gebildet wird, das Kneten und Kompaktieren des sandwichartigen Kompositmateriales und das Aufwinden des sandwichartigen Kompositmateriales; wobei die Verbesserung die Verwendung des polymeren Trennfilmes nach Anspruch 4 als wenigstens einen der Trennfilme aufweist.

9. Verfahren zur Herstellung einer Foliengießverbindung, welches das Gießen einer Schicht eines wärmehärtenden Harzes auf einen sich kontinuierlich fortbewegenden Trennfilm, das Einbringen von Verstärkungsmaterial auf die sich fortbewegende Harzschicht und das Kontaktieren eines zweiten Trennfilmes mit der oberen Fläche der verstärkten Harzschicht umfaßt, wodurch ein sandwichartiges Kompositmaterial gebildet wird, das Kneten und Kompaktieren des sandwichartigen Kompositmateriales und das Aufwinden des sandwichartigen Kompositmateriales; wobei die Verbesserung die Verwendung des polymeren Trennfilmes nach Anspruch 5 als wenigstens einen der Trennfilme aufweist.

10. Verfahren zur Herstellung einer Foliengießverbindung, welches das Gießen einer Schicht eines wärmehärtenden Harzes auf einen sich kontinuierlich fortbewegenden Trennfilm, das Einbringen von Verstärkungsmaterial auf die sich fortbewegende Harzschicht und das Kontaktieren eines zweiten Trennfilmes mit der oberen Fläche der verstärkten Harzschicht umfaßt, wodurch ein sandwichartiges Kompositmaterial gebildet wird, das Kneten und Kompaktieren des sandwichartigen Kompositmateriales und das Aufwinden des sandwichartigen Kompositmateriales; wobei die Verbesserung die Verwendung des polymeren Trennfilmes nach Anspruch 6 als wenigstens einen der Trennfilme aufweist.

11. Verfahren zur Herstellung einer dicken Gießverbindung, welches das Imprägnieren einer diskontinuierlichen Verstärkungsfaser mit einer Harzpaste umfaßt, das Aufbringen einer Schicht der imprägnierten Faser auf einen sich bewegenden Trennfilm als Träger, das Aufbringen eines zweiten Trennfilmes auf die obere Fläche der imprägnierten Faserschicht zum Bilden eines sandwichartigen Kompositmateriales, das Kompaktieren des Kompositmateriales und das Schneiden des kompaktierten Kompositmateriales auf eine gewünschte Länge; wobei die Verbesserung die Verwendung des polymeren Trennfilmes nach Anspruch 1 als wenigstens einen der Trennfilme umfaßt.

12. Verfahren zur Herstellung einer dicken Gießverbindung, welches das Imprägnieren einer diskontinuierlichen Verstärkungsfaser mit einer Harzpaste umfaßt, das Aufbringen einer Schicht der imprägnierten Faser auf einen sich bewegenden Trennfilm als Träger, das Aufbringen eines zweiten Trennfilmes auf die obere Fläche der imprägnierten Faserschicht zum Bilden eines sandwichartigen Kompositmateriales, das Kompaktieren des Kompositmateriales und das Schneiden des kompaktierten Kompositmateriales auf eine gewünschte Länge; wobei die Verbesserung die Verwendung des polymeren Trennfilmes nach Anspruch 4 als wenigstens einen der Trennfilme umfaßt.

13. Verfahren zur Herstellung einer dicken Gießverbindung, welches das Imprägnieren einer diskontinuierlichen Verstärkungsfaser mit einer Harzpaste umfaßt, das Aufbringen einer Schicht der imprägnierten Faser auf einen sich bewegenden Trennfilm als Träger, das Aufbringen eines zweiten Trennfilmes auf die obere Fläche der imprägnierten Faserschicht zum Bilden eines sandwichartigen Kompositmateriales, das Kompaktieren des Kompositmateriales und das Schneiden des kompaktierten Kompositmateriales auf eine gewünschte Länge; wobei die Verbesserung die Verwendung des polymeren Trennfilmes nach Anspruch 5 als wenigstens einen der Trennfilme umfaßt.

14. Verfahren zur Herstellung einer dicken Gießverbindung, welches das Imprägnieren einer diskontinuierlichen Verstärkungsfaser mit einer Harzpaste umfaßt, das Aufbringen einer Schicht der imprägnierten Faser auf einen sich bewegenden Trennfilm als Träger, das Aufbringen eines zweiten Trennfilmes auf die obere Fläche der imprägnierten Faserschicht zum Bilden eines sandwichartigen Kompositmateriales, das Kompaktieren des Kompositmateriales und das Schneiden des kompaktierten Kompositmateriales auf eine gewünschte Länge; wobei die Verbesserung die Verwendung des polymeren Trennfilmes nach Anspruch 6 als wenigstens einen der Trennfilme umfaßt.

## Patentansprüche (Patentansprüche für folgende(n) Vertragsstaat(en): ES)

1. Schmelzextrudierter polymerer Trennfilm mit:
(A) einem filmbildenden Grundpolymer und
(B) einem die Oberfläche modifizierenden Copolymerzusatz in einer zur Schaffung gewünschter Trenneigenschaften an der Oberfläche des Trennfilmes ausreichenden Menge, welcher Copolymerzusatz folgendes aufweist:
(1) eine Hartsegment-Polymerkomponente, die aus der aus Polyamid, Polyester, Polyurethan, Polyharnstoff, Vinyl-Copolymeren und Novolaken bestehenden Gruppe ausgewählt ist, wobei die Hartsegment-Polymerkomponente so ausgewählt ist, daß ein gewünschtes Maß an Verträglichkeit mit dem filmbildenden Grundpolymer erhalten wird; und
(2) eine Weichsegment-Polymerkomponente, die aus der aus Polyalkylenoxyd, Polyfluorkohlenstoff und Polydiorgano-Siloxan der Formel: 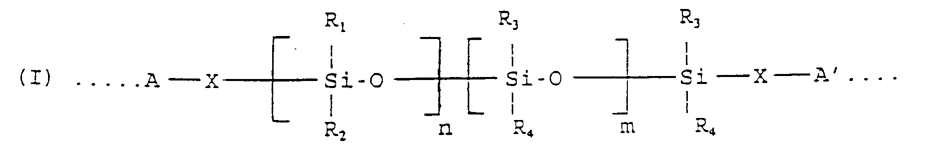 bestehenden Gruppe ausgewählt ist, worin R₁, R₂, R₃ und R₄ unabhängig ein lineares oder verzweigtes Alkyl mit C₁-C₁₈, ein Cycloalkyl, Alkenyl, Aryl, Aralkyl, ein halogeniertes Alkyl, ein halogeniertes Aryl oder ein halogeniertes Aralkyl darstellen;
X eine Alkylenradikale mit C₁-C₁₈, eine Arylen- oder Aralkylenradikale, vorzugsweise eine Alkylenradikale mit C₁-C₁₈, darstellt;
n und m gleich oder verschieden sind, wobei die Summe von n+m größer als 4 und kleiner als 1000 ist; und
A und A' unabhängig Hartsegmente oder Blöcke des filmbildenden Grundpolymers sind.

2. Polymerer Trennfilm nach Anspruch 1, bei dem die Hartsegment-Polymerkomponente aus der aus Polyamid, Polyester, Polyurethan und Polyharnstoff sowie Copolymeren davon bestehenden Gruppe ausgewählt ist; die Weichsegment-Polymerkomponente das Polydiorgano-Siloxan ist; und das filmbildende Grundpolymer aus der aus Polyamid, Polyester, Polyvinylchlorid, Polyvinylidenchlorid und Äthylen-Vinylazetat bestehenden Gruppe ausgewählt ist.

3. Polymerer Trennfilm nach Anspruch 2, bei dem das Polydiorgano-Siloxan aus der aus Polydialkyl-Siloxan, Polyfluoralkyl-Alkyl-Siloxan, Polydiaryl-Siloxan und Polyaryl-Alkyl-Siloxan bestehenden Gruppe ausgewählt ist.

4. Polymerer Trennfilm nach Anspruch 3, bei dem der Copolymerzusatz in dem Film in einer derartigen Menge vorhanden ist, daß die Siloxan enthaltende Weichsegment-Polymerkomponente zumindest 0,1 Gewichtsprozent des Filmes ausmacht.

5. Polymerer Trennfilm nach Anspruch 4, bei dem das filmbildende Grundpolymer Polyamid ist, die Hartsegment-Polymerkomponente Polyamid ist und die Weichsegment-Komponente Polydimethyl-Siloxan ist.

6. Polymerer Trennfilm nach Anspruch 4, bei dem das filmbildende Grundpolymer Polyamid ist, die Hartsegment-Polymerkomponente Polyharnstoff ist und die Weichsegment-Komponente Polydimethyl-Siloxan ist.

7. Verfahren zur Herstellung einer Foliengießverbindung, welches das Gießen einer Schicht eines wärmehärtenden Harzes auf einen sich kontinuierlich fortbewegenden Trennfilm, das Einbringen von Verstärkungsmaterial auf die sich fortbewegende Harzschicht und das Kontaktieren eines zweiten Trennfilmes mit der oberen Fläche der verstärkten Harzschicht umfaßt, wodurch ein sandwichartiges Kompositmaterial gebildet wird, das Kneten und Kompaktieren des sandwichartigen Kompositmateriales sowie das Aufwinden des sandwichartigen Kompositmateriales; wobei die Verbesserung die Verwendung des polymeren Trennfilmes nach Anspruch 1 als wenigstens einen der Trennfilme aufweist.

8. Verfahren zur Herstellung einer Foliengießverbindung, welches das Gießen einer Schicht eines wärmehärtenden Harzes auf einen sich kontinuierlich fortbewegenden Trennfilm, das Einbringen von Verstärkungsmaterial auf die sich fortbewegende Harzschicht und das Kontaktieren eines zweiten Trennfilmes mit der oberen Flache der verstärkten Harzschicht umfaßt, wodurch ein sandwichartiges Kompositmaterial gebildet wird, das Kneten und Kompaktieren des sandwichartigen Kompositmateriales und das Aufwinden des sandwichartigen Kompositmateriales; wobei die Verbesserung die Verwendung des polymeren Trennfilmes nach Anspruch 4 als wenigstens einen der Trennfilme aufweist.

9. Verfahren zur Herstellung einer Foliengießverbindung, welches das Gießen einer Schicht eines wärmehärtenden Harzes auf einen sich kontinuierlich fortbewegenden Trennfilm, das Einbringen von Verstärkungsmaterial auf die sich fortbewegende Harzschicht und das Kontaktieren eines zweiten Trennfilmes mit der oberen Fläche der verstärkten Harzschicht umfaßt, wodurch ein sandwichartiges Kompositmaterial gebildet wird, das Kneten und Kompaktieren des sandwichartigen Kompositmateriales und das Aufwinden des sandwichartigen Kompositmateriales; wobei die Verbesserung die Verwendung des polymeren Trennfilmes nach Anspruch 5 als wenigstens einen der Trennfilme aufweist.

10. Verfahren zur Herstellung einer Foliengießverbindung, welches das Gießen einer Schicht eines wärmehärtenden Harzes auf einen sich kontinuierlich fortbewegenden Trennfilm, das Einbringen von Verstärkungsmaterial auf die sich fortbewegende Harzschicht und das Kontaktieren eines zweiten Trennfilmes mit der oberen Fläche der verstärkten Harzschicht umfaßt, wodurch ein sandwichartiges Kompositmaterial gebildet wird, das Kneten und Kompaktieren des sandwichartigen Kompositmateriales und das Aufwinden des sandwichartigen Kompositmateriales; wobei die Verbesserung die Verwendung des polymeren Trennfilmes nach Anspruch 6 als wenigstens einen der Trennfilme aufweist.

11. Verfahren zur Herstellung einer dicken Gießverbindung, welches das Imprägnieren einer diskontinuierlichen Verstärkungsfaser mit einer Harzpaste umfaßt, das Aufbringen einer Schicht der imprägnierten Faser auf einen sich bewegenden Trennfilm als Träger, das Aufbringen eines zweiten Trennfilmes auf die obere Fläche der imprägnierten Faserschicht zum Bilden eines sandwichartigen Kompositmateriales, das Kompaktieren des Kompositmateriales und das Schneiden des kompaktierten Kompositmateriales auf eine gewünschte Länge; wobei die Verbesserung die Verwendung des polymeren Trennfilmes nach Anspruch 1 als wenigstens einen der Trennfilme umfaßt.

12. Verfahren zur Herstellung einer dicken Gießverbindung, welches das Imprägnieren einer diskontinuierlichen Verstärkungsfaser mit einer Harzpaste umfaßt, das Aufbringen einer Schicht der imprägnierten Faser auf einen sich bewegenden Trennfilm als Träger, das Aufbringen eines zweiten Trennfilmes auf die obere Fläche der imprägnierten Faserschicht zum Bilden eines sandwichartigen Kompositmateriales, das Kompaktieren des Kompositmateriales und das Schneiden des kompaktierten Kompositmateriales auf eine gewünschte Länge; wobei die Verbesserung die Verwendung des polymeren Trennfilmes nach Anspruch 4 als wenigstens einen der Trennfilme umfaßt.

13. Verfahren zur Herstellung einer dicken Gießverbindung, welches das Imprägnieren einer diskontinuierlichen Verstärkungsfaser mit einer Harzpaste umfaßt, das Aufbringen einer Schicht der imprägnierten Faser auf einen sich bewegenden Trennfilm als Träger, das Aufbringen eines zweiten Trennfilmes auf die obere Fläche der imprägnierten Faserschicht zum Bilden eines sandwichartigen Kompositmateriales, das Kompaktieren des Kompositmateriales und das Schneiden des kompaktierten Kompositmateriales auf eine gewünschte Länge; wobei die Verbesserung die Verwendung des polymeren Trennfilmes nach Anspruch 5 als wenigstens einen der Trennfilme umfaßt.

14. Verfahren zur Herstellung einer dicken Gießverbindung, welches das Imprägnieren einer diskontinuierlichen Verstärkungsfaser mit einer Harzpaste umfaßt, das Aufbringen einer Schicht der imprägnierten Faser auf einen sich bewegenden Trennfilm als Träger, das Aufbringen eines zweiten Trennfilmes auf die obere Fläche der imprägnierten Faserschicht zum Bilden eines sandwichartigen Kompositmateriales, das Kompaktieren des Kompositmateriales und das Schneiden des kompaktierten Kompositmateriales auf eine gewünschte Länge; wobei die Verbesserung die Verwendung des polymeren Trennfilmes nach Anspruch 6 als wenigstens einen der Trennfilme umfaßt.

15. Verfahren zum Herstellen eines polymeren Trennfilmes, welches die Schmelextrusion einer Zusammensetzung, wie folgt, umfaßt:
(A) ein filmbildendes Grundpolymer und
(B) ein die Oberfläche modifizierender Copolymerzusatz in einer zur Schaffung gewünschter Trenneigenschaften an der Oberfläche des Trennfilmes ausreichenden Menge, welcher Copolymerzusatz folgendes aufweist:
(1) eine Hartsegment-Polymerkomponente, die aus der aus Polyamid, Polyester, Polyurethan, Polyharnstoff, Vinyl-Copolymeren und Novolaken bestehenden Gruppe ausgewählt ist, wobei die Hartsegment-Polymerkomponente so ausgewählt ist, daß ein gewünschtes Maß an Verträglichkeit mit dem filmbildenden Grundpolymer erhalten wird; und
(2) eine Weichsegment-Polymerkomponente, die aus der aus Polyalkylenoxyd, Polyfluorkohlenstoff und Polydiorgano-Siloxan der Formel: 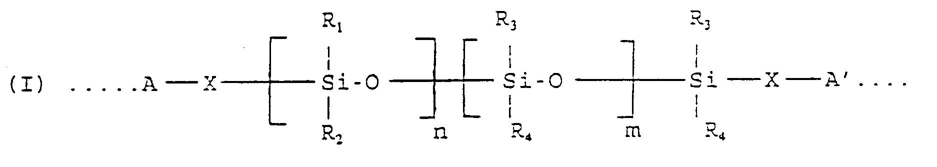 bestehenden Gruppe ausgewählt ist, worin R₁, R₂, R₃ und R₄ unabhängig ein lineares oder verzweigtes Alkyl mit C₁-C₁₈, ein Cycloalkyl, Alkenyl, Aryl, Aralkyl, ein halogeniertes Alkyl, ein halogeniertes Aryl oder ein halogeniertes Aralkyl darstellen;
X eine Alkylenradikale mit C₁-C₁₈, eine Arylen- oder Aralkylenradikal, vorzugsweise eine Alkylenradikale mit C₁-C₁₈, darstellt;
n und m gleich oder verschieden sind, wobei die Summe von n+m größer als 4 und kleiner als 1000 ist; und
A und A' unabhängig Hartsegmente oder Blöcke des filmbildenden Grundpolymers sind.

16. Verfahren nach Anspruch 15, bei dem die Hartsegment-Polymerkomponente aus der aus Polyamid, Polyester, Polyurethan und Polyharnstoff sowie Copolymeren davon bestehenden Gruppe ausgewählt ist; die Weichsegment-Polymerkomponente das Polydiorgano-Siloxan ist; und das filmbildende Grundpolymer aus der aus Polyamid, Polyester, Polyvinylchlorid, Polyvinylidenchlorid und Äthylen-Vinylazetat bestehenden Gruppe ausgewählt ist.

17. Verfahren nach Anspruch 16, bei dem das Polydiorgano-Siloxan aus der aus Polydialkyl-Siloxan, Polyfluoralkyl-Alkyl-Siloxan, Polydiaryl-Siloxan und Polyaryl-Alkyl-Siloxan bestehenden Gruppe ausgewählt ist.

18. Verfahren nach Anspruch 17, bei dem der Copolymerzusatz in dem Film in einer derartigen Menge vorhanden ist, daß die Siloxan enthaltende Weichsegment-Polymerkomponente zumindest 0,1 Gewichtsprozent des Filmes ausmacht.

19. Verfahren nach Anspruch 18, bei dem das filmbildende Grundpolymer Polyamid ist, die Hartsegment-Polymerkomponente Polyamid ist und die Weichsegment-Komponente Polydimethyl-Siloxan ist.

20. Verfahren nach Anspruch 18, bei dem das filmbildende Grundpolymer Polyamid ist, die Hartsegment-Polymerkomponente Polyharnstoff ist und die Weichsegment-Komponente Polydimethyl-Siloxan ist.

## Revendications (Revendications pour l'(les) Etat(s) contractant(s) suivant(s): BE, DE, DK, FR, GB, IT, LU)

1. Film de séparation polymère extrudé à l'état de masse fondue, comprenant :
(A) un polymère de base formant un film et
(B) un additif en copolymère modificateur de surface dans une quantité suffisante pour conférer les propriétés désirées de séparation à la surface du film de séparation, ledit additif en copolymère comprenant :
(1) un constituant polymère à segment dur choisi dans le groupe constitué des copolymères de polyamide, polyester, polyuréthane, polyurée, vinyle et des novolaques, ledit constituant polymère à segment dur étant choisi de manière à obtenir le niveau désiré de la compatibilité avec le polymère de base formant un film; et
(2) un constituant polymère à segment doux choisi dans le groupe constitué des : oxyde de polyalkylène, polyfluorocarbone, et polydiorganosiloxane de formule : 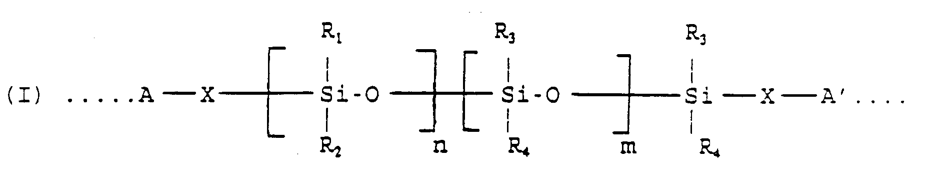 dans laquelle R₁, R₂, R₃ et R₄ représentent indépendamment un groupe alkyle cycloalkyle, alcényle, aryle, aralkyle, alkyle halogéné, aryle halogéné, ou aralkyle halogéné linéaire ou ramifié en C₁-C₁₈;
X représente des radicaux alkylène, arylène ou aralkylène en C₁-C₁₈, de préférence des radicaux alkylène en C₂-C₆;
n et m peuvent être identiques ou différents, la somme de n+m étant supérieure à 4 et inférieure à 1000; et
A et A' sont des segments indépendamment durs ou des séquences du polymère de base formant un film.

2. Film de séparation polymère selon la revendication 1, dans lequel ledit constituant polymère à segment dur est choisi dans le groupe constitué des polyamide, polyester, polyuréthane, et polyurée et de leurs copolymères; ledit constituant polymère à segment doux est ledit polydiorganosiloxane; et le polymère de base formant un film est choisi dans le groupe constitué des copolymères : polyamide, polyester, chlorure de polyvinyle, chlorure de polyvinylidène, et éthylène-acétate de vinyle.

3. Film de séparation polymère selon la revendication 2, dans lequel ledit polydiorganosiloxane est choisi dans le groupe constitué des polydialkylsiloxane, polyfluoroalkyl alkyl siloxane, polydiarylsiloxane, et polyaryl alkyl siloxane.

4. Film de séparation polymère selon la revendication 3 dans lequel l'additif en copolymère est présent dans le film dans une quantité telle que le constituant polymère à segment doux contenant le siloxane est au moins 0,1 % en poids du film.

5. Film de séparation polymère selon la revendication 4, dans lequel le polymère de base formant un film est un polyamide, le constituant polymère à segment dur est un polyamide, et le constituant polymère à segment doux est le polydiméthylsiloxane.

6. Film de séparation polymère selon la revendication 4, dans lequel le polymère de base formant un film est un polyamide, le constituant polymère à segment dur est une polyurée, et le constituant polymère à segment doux est le polydiméthylsiloxane.

7. Dans un procédé pour la fabrication d'un composé de moulage de feuille comprenant le coulage d'une couche de résine thermodurcissable sur un film de séparation avançant en continu, l'introduction d'un matériau de renforcement sur la couche de résine avançant, la mise en contact d'un second film de séparation sur la surface supérieure de la couche de résine renforcée, d'où la formation d'un composite à plusieurs couches, le malaxage et le tassage du composite à plusieurs couches, et le bobinage du composite à plusieurs couches, le perfectionnement comprenant l'utilisation, comme au moins l'un desdits films de séparation, du film de séparation polymère de la revendication 1.

8. Dans un procédé pour la fabrication d'un composé de moulage de feuille comprenant le coulage d'une couche de résine thermodurcissable sur un film de séparation avançant en continu, l'introduction d'un matériau de renforcement sur la couche de résine avançant, la mise en contact d'un second film de séparation sur la surface supérieure de la couche de résine renforcée, d'où la formation d'un composite à plusieurs couches, le malaxage et le tassage du composite à plusieurs couches, et le bobinage du composite à plusieurs couches, le perfectionnement comprenant l'utilisation, comme au moins l'un desdits films de séparation, du film de séparation polymère de la revendication 4.

9. Dans un procédé pour la fabrication d'un composé de moulage de feuille comprenant le coulage d'une couche de résine thermodurcissable sur un film de séparation avançant en continu, l'introduction d'un matériau de renforcement sur la couche de résine avançant, la mise en contact d'un second film de séparation sur la surface supérieure de la couche de résine renforcée, d'où la formation d'un composite à plusieurs couches, le malaxage et le tassage du composite à plusieurs couches, et le bobinage du composite à plusieurs couches, le perfectionnement comprenant l'utilisation, comme au moins l'un desdits films de séparation, du film de séparation polymère de la revendication 5.

10. Dans un procédé pour la fabrication d'un composé de moulage de feuille comprenant le coulage d'une couche de résine thermodurcissable sur un film de séparation avançant en continu, l'introduction d'un matériau de renforcement sur la couche de résine avançant, la mise en contact d'un second film de séparation sur la surface supérieure de la couche de résine renforcée, d'où la formation d'un composite à plusieurs couches, le malaxage et le tassage du composite à plusieurs couches, et le bobinage du composite à plusieurs couches, le perfectionnement comprenant l'utilisation, comme au moins l'un desdits films de séparation, du film de séparation polymère de la revendication 6.

11. Dans un procédé pour la fabrication d'un composé de moulage épais comprenant l'imprégnation d'une fibre de renforcement discontinue avec une pâte résineuse, l'application d'une couche de la fibre imprégnée à un film de séparation de support en mouvement, l'application d'un second film de séparation à la surface supérieure de la couche de fibre imprégnée afin de former un composite à plusieurs couches, le tassage du composite, et la coupe du composite tassé à une longueur désirée; le perfectionnement comprenant l'utilisation, comme au moins l'un desdits films de séparation, du film de séparation polymère de la revendication 1.

12. Dans un procédé pour la fabrication d'un composé de moulage épais comprenant l'imprégnation d'une fibre de renforcement discontinue avec une pâte résineuse, l'application d'une couche de la fibre imprégnée à un film de séparation de support en mouvement, l'application d'un second film de séparation à la surface supérieure de la couche de fibre imprégnée afin de former un composite à plusieurs couches, le tassage du composite, et la coupe du composite tassé à une longueur désirée; le perfectionnement comprenant l'utilisation, comme au moins l'un desdits films de séparation, du film de séparation polymère de la revendication 4.

13. Dans un procédé pour la fabrication d'un composé de moulage épais comprenant l'imprégnation d'une fibre de renforcement discontinue avec une pâte résineuse, l'application d'une couche de la fibre imprégnée à un film de séparation de support en mouvement, l'application d'un second film de séparation à la surface supérieure de la couche de fibre imprégnée afin de former un composite à plusieurs couches, le tassage du composite, et la coupe du composite tassé à une longueur désirée; le perfectionnement comprenant l'utilisation, comme au moins l'un desdits films de séparation, du film de séparation polymère de la revendication 5.

14. Dans un Procédé pour la fabrication d'un composé de moulage épais comprenant l'imprégnation d'une fibre de renforcement discontinue avec une pâte résineuse, l'application d'une couche de la fibre imprégnée à un film de séparation de support en mouvement, l'application d'un second film de séparation à la surface supérieure de la couche de fibre imprégnée afin de former un composite à plusieurs couches, le tas sage du composite, et la coupe du composite tassé à une longueur désirée; le perfectionnement comprenant l'utilisation, comme au moins l'un desdits films de séparation, du film de séparation polymère de la revendication 6.

## Revendications (Revendications pour l'(les) Etat(s) contractant(s) suivant(s): ES)

1. Film de séparation polymère extrudé à l'état de masse fondue, comprenant :
(A) un polymère de base formant un film et
(B) un additif en copolymère modificateur de surface dans une quantité suffisante pour conférer les Propriétés de séparation désirées à la surface du film de séparation; ledit additif en copolymère comportant :
(1) un constituant polymère à segment dur choisi dans le groupe constitué des copolymères de polyamide, polyester, polyuréthane, polyurée, vinyle et des novolaques, ledit constituant en polymère à segment dur étant choisi de façon à obtenir le niveau désiré de la compatibilité avec le polymère de base formant un film; et
(2) un constituant polymère à segment doux choisi dans le groupe constitué des : oxyde de polyalkylène, polyfluorocarbone, et polydiorganosiloxane de la formule : 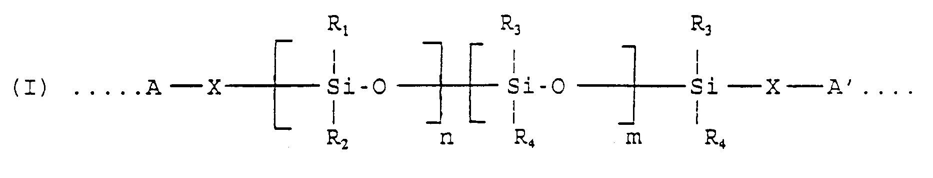 dans laquelle R₁, R₂, R₃ et R₄ représentent indépendamment un groupe alkyle, cycloalkyle, alcényle, aryle, aralkyle, alkyle halogéné, aryle halogéné, ou aralkyle halogéné, linéaire ou ramifié en C₁-C₁₈;
X représente des radicaux alkylène, arylène ou aralkylène en C₁-C₁₈, de préférence des radicaux alkylène en C₂-C₆;
n et m peuvent être identiques ou différents, la somme de n+m étant supérieure à 4 et inférieure à 1000; et
A et A' sont indépendamment des segments durs ou des séquences du polymère de base formant un film.

2. Film de séparation polymère selon la revendication 1, dans lequel ledit constituant polymère à segment dur est choisi dans le groupe constitué des polyamide, polyester, polyuréthane, et polyurée et de leurs copolymères; ledit constituant polymère à segment doux est ledit polydiorganosiloxane, et le polymère de base formant un film est choisi dans le groupe constitué des : polyamide, polyester, chlorure de polyvinyle, chlorure de polyvinylidène, et éthylène-acétate de vinyle.

3. Film de séparation polymère selon la revendication 2, dans lequel ledit polydiorganosiloxane est choisi dans le groupe constitué des : polydialkylsiloxane, polyfluoroalkyl alkyl siloxane, polydiarylsiloxane, et polyaryl alkyl siloxane.

4. Film de séparation polymère selon la revendication 3, dans lequel l'additif en copolymère est présent dans le film dans une quantité telle que le constituant polymère à segment doux contenant le siloxane est au moins 0,1 % en poids du film.

5. Film de séparation polymère selon la revendication 4, dans lequel le polymère de base formant un film est un polyamide, le constituant polymère à segment dur est un polyamide, et le constituant polymère à segment doux est le polydiméthylsiloxane.

6. Film de séparation polymère selon la revendication 4, dans lequel le polymère de base formant un film est un polyamide, le constituant polymère à segment dur est une polyurée, et le constituant polymère à segment doux est le polydiméthylsiloxane.

7. Dans un procédé pour la fabrication d'un composé de moulage de feuille comprenant le coulage d'une couche d'une résine thermodurcissable sur un film de séparation avançant en continu, l'introduction d'un matériau de renforcement sur la couche de résine avançant, la mise en contact d'un second film de séparation sur la surface supérieure de la couche de résine renforcée, d'où la formation d'un composite à plusieurs couches, le malaxage et le tassage du composite à plusieurs couches, et le bobinage du composite à plusieurs couches, le perfectionnement comprenant l'utilisation, comme au moins l'un desdits films de séparation, du film de séparation polymère de la revendication 1.

8. Dans un procédé pour la fabrication d'un composé de moulage de feuille comprenant le coulage d'une couche de résine thermodurcissable sur un film de séparation avançant en continu, l'introduction d'un matériau de renforcement sur la couche de résine avançant, la mise en contact d'un second film de séparation sur la surface supérieure de la couche de résine renforcée, d'où la formation d'un composite à plusieurs couches, le malaxage et le tassage du composite à plusieurs couches, et le bobinage du composite à plusieurs couches, le perfectionnement comprenant l'utilisation, comme au moins l'un desdits films de séparation, du film de séparation polymère de la revendication 4.

9. Dans un procédé pour la fabrication d'un composé de moulage de feuille comprenant le coulage d'une couche de résine thermodurcissable sur un film de séparation avançant en continu, l'introduction d'un matériau de renforcement sur la couche de résine avançant, la mise en contact d'un second film de séparation sur la surface supérieure de la couche de résine renforcée, d'où la formation d'un composite à plusieurs couches, le malaxage et le tassage du composite à plusieurs couches, et le bobinage du composite à plusieurs couches; le perfectionnement comprenant l'utilisation, comme au moins l'un desdits films de séparation, du film de séparation polymère de la revendication 5.

10. Dans un procédé pour la fabrication d'un composé de moulage de feuille comprenant le coulage d'une feuille de résine thermodurcissable sur un film de séparation avançant en continu, l'introduction d'un matériau de renforcement sur la couche de résine avançant, la mise en contact d'un second film de séparation sur la surface supérieure de la couche de résine renforcée, d'où la formation d'un composite à plusieurs couches, le malaxage et le tassage du composite à plusieurs couches, et le bobinage du composite à plusieurs couches, le perfectionnement comprenant l'utilisation, comme au moins l'un desdits films de séparation, du film de séparation polymère de la revendication 6.

11. Dans un procédé pour la fabrication d'un composé de moulage épais comprenant l'imprégnation d'une fibre de renforcement discontinue avec une pâte résineuse, l'application d'une couche de la fibre imprégnée à un film de séparation de support en mouvement, l'application d'un second film de séparation à la surface supérieure de la couche de fibre imprégnée afin de former un composite à plusieurs couches, le tassage du composite, et la coupe du composite tassé à une longueur désirée; le perfectionnement comprenant l'utilisation, comme au moins l'un desdits films de séparation, du film de séparation polymère de la revendication 1.

12. Dans un procédé pour la fabrication d'un composé de moulage épais comprenant l'imprégnation d'une fibre de renforcement discontinue avec une pâte résineuse, l'application d'une couche de la fibre imprégnée à un film de séparation de support en mouvement, l'application d'un second film de séparation à la surface supérieure de la couche de fibre imprégnée afin de former un composite à plusieurs couches, le tassage du composite, et la coupe du composite tassé à une longueur désirée; le perfectionnement comprenant l'utilisation, comme au moins l'un desdits films de séparation, du film de séparation polymère de la revendication 4.

13. Dans un procédé pour la fabrication d'un composé de moulage épais comprenant l'imprégnation d'une fibre de renforcement discontinue avec une pâte résineuse, l'application d'une couche de la fibre imprégnée à un film de séparation de support en mouvement, l'application d'un second film de séparation à la surface supérieure de la couche de fibre imprégnée afin de former un composite à plusieurs couches, le tassage du composite, et la coupe du composite tassé à une longueur désirée; le perfectionnement comprenant l'utilisation, comme au moins l'un desdits films de séparation, du film de séparation polymère de la revendication 5.

14. Dans un procédé pour la fabrication d'un composé de moulage épais comprenant l'imprégnation d'une fibre de renforcement discontinue avec une pâte résineuse, l'application d'une couche de la fibre imprégnée à un film de séparation de support en mouvement, l'application d'un second film de séparation à la surface supérieure de la couche de fibre imprégnée afin de former un composite à plusieurs couches, le tassage du composite, et la coupe du composite tassé à une longueur désirée; le perfectionnement comprenant l'utilisation, comme au moins l'un desdits films de séparation, du film de séparation polymère de la revendication 6.

15. Procédé pour préparer un film de séparation polymère qui comprend l'extrusion à l'état de masse fondue d'une composition comportant :
(A) un polymère de base formant un film et
(B) un additif en copolymère modificateur de surface dans une quantité suffisante pour conférer les propriétés de séparation désirées à la surface du film de séparation; ledit additif en copolymère comprenant :
(1) un constituant polymère à segment dur choisi dans le groupe constitué des copolymères de polyamide, polyester, polyuréthane, polyurée, vinyle et des novolaques, ledit constituant polymère à segment dur étant choisi de manière à obtenir le niveau désiré de la compatibilité avec le polymère de base formant un film; et
(2) un constituant polymère à segment doux choisi dans le groupe constitué des : oxyde de polyalkylène, polyfluorocarbone, et polydiorganosiloxane de la formule : 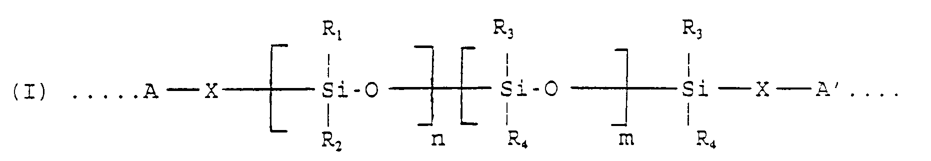 dans laquelle R₁, R₂, R₃ et R₄ représentent indépendamment un groupe alkyle, cycloalkyle alcényle, aryle, aralkyle, alkyle halogéné, aryle halogéné, ou aralkyle halogéné, linéaire ou ramifié en C₁-C₁₈;
X représente des radicaux alkylène, arylène ou aralkylène en C₁-C₁₈, de préférence des radicaux alkylène en C₂-C₆;
n et m peuvent être identiques ou différents, la somme de n+m étant supérieure à 4 et inférieure à 1000; et
A et A' sont indépendamment des segments durs ou des séquences d'un polymère de base formant un film.

16. Procédé selon la revendication 15, dans lequel le constituant polymère à segment dur est choisi dans le groupe constitué des : polyamide, polyester, polyuréthane, et polyurée et des copolymères de ceux-ci, ledit constituant polymère à segment doux est ledit polydiorganosiloxane; et le polymère de base formant un film est choisi dans le groupe constitué des : polyamide, polyester, chlorure de polyvinyle, chlorure de polyvinylidène, et éthylène-acétate de vinyle.

17. Procédé selon la revendication 16, dans lequel ledit polydiorganosiloxane est choisi dans le groupe constitué des : polydialkylsiloxane, polyfluoroalkyl alkyl siloxane, polydiarylsiloxane, et polyaryl alkyl siloxane.

18. Procédé selon la revendication 17, dans lequel l'additif en copolymère est présent dans le film dans une quantité telle que le constituant polymère à segment doux contenant le siloxane est au moins 0,1 % en poids du film.

19. Procédé selon la revendication 18, dans lequel le polymère de base formant un film est un polyamide, le constituant polymère à segment dur est un polyamide, et le constituant polymère à segment doux est le polydiméthylsiloxane.

20. Procédé selon la revendication 18, dans lequel le polymère de base formant un film est un polyamide, le constituant polymère à segment dur est une polyurée, et le constituant polymère à segment doux est le polydiméthylsiloxane.
